# EUROPEAN PATENT SPECIFICATION

(11) **EP 1 372 119 B1**
(45) Date of publication and mention of the grant of the patent: **12.09.2007**
(21) Application number: 03012242.8
(22) Date of filing: 10.06.2003
(51) Int. Cl.: G07F 7/10, G07F 7/08

(54) **IC card and cryptographic communication method between IC cards**
Chipkarte und Methode zur kryptographischen Kommunikation zwischen Chipkarten
Carte à puce et méthode de communication cryptée entre carte à puce

(30) Priority: 10.06.2002 JP 2002169193
(43) Date of publication of application: 17.12.2003
(73) Proprietor: Sakamura, Ken, Tokyo (JP); Koshizuka, Noboru, Musashino-shi, Tokyo 180-0013 (JP); NTT DoCoMo, Inc., Tokyo 100-6150 (JP)
(72) Inventor: Sakamura, Ken, Shinagawa-ku, Tokyo (JP); Koshizuka, Noboru, Musashino-shi, Tokyo (JP); Aono, Hiroshi, c/o Int. Prop. Dept., NTT DoCoMo, Inc., Chiyoda-ku, Tokyo (JP); Ishii, Kazuhiko, c/o Int. Prop. Dept., NTT DoCoMo, Inc., Chiyoda-ku, Tokyo (JP); Mori, Kensaku, c/o Int. Prop. Dept., NTT DoCoMo, Inc., Chiyoda-ku, Tokyo (JP); Hongo, Sadayuki, c/o Int. Prop. Dept., NTT DoCoMo, Inc., Chiyoda-ku, Tokyo (JP)
(74) Representative: HOFFMANN EITLE

(56) References cited:
- EP-A- 0 668 579
- EP-A- 0 932 128
- WO-A-01/67325
- WO-A-02/082386
- US-B1- 6 192 349
- "ISO/IEC 7816-4 : Interindustry command for interchange" ISO/IEC STANDARD, [Online] 1 September 1995 (1995-09-01), XP002258173 Retrieved from the Internet: <URL:www.ttfn.net/techno/smartcards/iso781 6_html> [retrieved on 2003-10-16]
- LEACH J: "Dynamic Authentication for Smartcards" COMPUTERS & SECURITY. INTERNATIONAL JOURNAL DEVOTED TO THE STUDY OF TECHNICAL AND FINANCIAL ASPECTS OF COMPUTER SECURITY, ELSEVIER SCIENCE PUBLISHERS. AMSTERDAM, NL, vol. 14, no. 5, 1995, pages 385-389, XP004002047 ISSN: 0167-4048

## Description

The present invention relates to an IC card, and a cryptographic communication method between IC cards. More particularly, the present invention relates to an IC card to be used in a communication terminal, and a cryptographic communication method between IC cards or between an IC card and a tamper-resistant apparatus having an equivalent function to an IC card. The present invention further relates to a cryptographic communication method used in an electronic ticket distribution system.

Cryptographic communication technologies, such as "Internet Draft The SSL Protocol Version 3.0" and "RFC2246 The TLS Protocol Version 1.0" are well known nowadays. Since these technologies do not largely change the schemes of the present network techniques and network protocols, they are very effective for transmitting critical information such as personal information and credit card numbers secretly on an open network such as the Internet. Software-based installation and hardware-based installation such as a PCI-type cryptographic key have been developed, and various products are commercially available nowadays.

EP 0 668 579 A relates to secure money transfer techniques using smart cards. In order to provide secure electronic financial transactions, a monetary value is electronically stored on an IC card, which includes an electronic security lock having a closed state and an open state. In the closed state, the lock disables the smart card from transferring any of the monetary values, and in the open state, the smart card is enabled to transfer all or a portion of the monetary values. The smart card includes an electronic security key for changing the state of the electronic security lock from the open state to the closed state and for changing the state of the electronic security lock from the closed state to the open state. Respective smart cards contain a security key storage register for the storage of an electronic security key. Further, a security key comparison device is provided having two inputs for receiving and comparing two security keys. If the keys match a corresponding signal is generated by the security key comparison device, causing the security lock to switch between the locked state and the unlocked state. It is described that a plurality of security keys can be used in the respective cards. Further, it is described that two smart cards connected via a smart card reader network exchange encrypted packets.

However, a cryptographic communication technology for application in IC cards remains still unknown. Especially, there are no common interfaces used for cryptographic algorithms in IC cards. Hence, it is always necessary to rearrange a calling port of cryptographic algorithm when the cryptographic algorithm in use is changed.

EP 0 932 128 A relates to an electronic ticket system comparable to the electronic ticket distribution system described further below.

It is an object of the present invention to provide a cryptographic communication technology between IC cards capable of changing a cryptographic algorithm in use without changing a predetermined communication protocol.

According to a first aspect of the present invention, there is provided a cryptographic communication method between a first IC card and a second IC card, comprising the steps of: at the beginning of data communication for a mutual authentication between the first IC card and the second IC card, exchanging information about one or plural usable encryption algorithms between the first IC card and the second IC card in order to select a commonly usable encryption algorithm between the first IC card and the second IC card according to a predetermined order of priority among the usable encryption algorithms; in the first IC card, encrypting a plain text data to be sent into an encrypted data by using the selected commonly usable encryption algorithm; editing the encrypted data into a pre-transmission data of a predetermined bit-length required by a predetermined transmission protocol by filling zeros to null bits of the data and converting the pre-transmission data to a transmission data packet for data-transmission; and transmitting the transmission data packet to a communication media; and in the second IC card, receiving the transmission data packet from the communication media; reversely converting the received transmission data packet to a pre-transmission data and re-editing the pre-transmission data into an encrypted data the same as the original encrypted data sent by the first IC card by deleting zeros filled in the null bits; and decrypting the encrypted data into a plain text data the same as the original plain text data sent by the first IC card by using the selected commonly usable encryption algorithm.

In the cryptographic communication method between the first IC card and the second IC card mentioned above, the first and the second IC cards can include a device having an equivalent function to an IC card.

In the cryptographic communication method between the first IC card and the second IC card mentioned above, it is possible to enable both the first and the second IC cards to have information in order of priority of usage among a plurality of encryption algorithms; and in the mutual authentication at the beginning of data communication between the first and the second IC cards, to exchange information of usable encryption algorithms between the first and the second IC cards in order to select an encryption algorithm that is given a highest order of priority of usage among the commonly usable encryption algorithms between the first and the second IC cards.

According to a second aspect of the present invention, there is provided an electronic ticket distribution system adapted to apply a cryptographic communication method between IC cards, wherein the electronic ticket distribution system comprises: a server having a tamper resistant device, the device being arranged to issue and sell electronic tickets, and which has a first function means equivalent to an IC card; a user terminal having an electrical communication means and having an interface for signal exchange with an IC card, the IC card being connected to the interface and arranged to execute purchase and storage of an electric ticket; and a ticket collecting machine, which has a second function means equivalent to an IC card, arranged to collect electronic tickets upon their usage; the method comprising the steps of: exchanging information about one or plural commonly usable encryption algorithms at the beginning of a mutual authentication between the IC card and the first or the second function means equivalent to an IC card; selecting an encryption algorithm commonly usable between the IC card and the first or the second function means equivalent to an IC card as an encryption algorithm to be used for mutual authentication and for concealment of communication data between the IC card and the first or the second function means equivalent to an IC card, according to the information exchanged at the beginning of the mutual authentication between the IC card and the first or the second function means equivalent to an IC card; and in one of the IC card and the first or the second function means equivalent to an IC card, encrypting a plain text data to be sent into an encrypted data by using the selected commonly usable encryption algorithm; editing the encrypted data into a pre-transmission data of a predetermined bit-length required by a predetermined transmission protocol by filling zeros to null bits of the data and converting the pre-transmission data to a transmission data packet for data-transmission; and transmitting the transmission data packet to a communication media; and in other one of the IC card and the first or the second function means equivalent to an IC card; receiving the transmission data packet from the communication media; reversely converting the received transmission data packet to a pre-transmission data of the predetermined bit-length and re-editing the pre-transmission data into an encrypted data the same as the original encrypted data that was sent by one of the IC card and the first or the second function means equivalent to an IC card by deleting zeros filled in the null bits; and decrypting the encrypted data into a plain text data the same as the original plain text data that was sent by one of the IC card and the first or the second function means equivalent to an IC card by using the selected commonly usable encrypted algorithm.

According to a third aspect of the present invention, there may be provided an IC card comprising: a selector of encryption algorithm arranged to select a commonly usable encryption algorithm as an encryption algorithm for mutual communication with an opposite IC card, according to an exchange of information about one or plural usable encryption algorithms between the opposite IC card at the beginning of a mutual authentication with the opposite IC card according to a predetermined order of priority among the usable encryption algorithms; an encryption means arranged to encrypt a first plain text data to be sent into a first encrypted data by using the selected encryption algorithm; an editing means arranged to edit the first encrypted data into a first pre-transmission data of a predetermined bit-length required by a predetermined transmission protocol by filling zeros to null bits of the data; a converting means arranged to convert the first pre-transmission data into a first transmission data packet for data-transmission and for transmitting the first transmission data packet to a communication media; a reversely-converting means arranged to reversely convert a second transmission data packet received from the communication media into a second pre-transmission data of the predetermined bit-length; a re-editing means arranged to re-edit the second pre-transmission data into a second encrypted data by deleting zeros filled in null bits of the data; and a decryption means arranged to decrypt the second encrypted data into a second plain text data as the same of the original by using the selected encryption algorithm.

For a better understanding of the invention and to show how the same may be carried into effect, reference will now be made, by way of example, to the accompanying drawings, in which:
FIG. 1 is a block diagram showing a cryptographic communication system between IC cards of one embodiment of the present invention;
FIG. 2 is a block diagram showing a communication procedure carried out by IC cards in the embodiment mentioned above;
FIG. 3 is a block diagram showing a functional structure of an IC card used in the embodiment mentioned above;
FIG. 4 is a schematic diagram show in an inner configuration of an IC chip included in an IC card, which is used in the cryptographic communication system of the embodiment;
FIG. 5 is a schematic diagram showing an electronic ticket distribution system;
FIG. 6 is a sequential flowchart showing a cryptographic communication method between IC cards of the embodiment;
FIG. 7 is a flowchart showing a converting procedure and a reversely converting procedure of encrypted data according to the cryptographic communication method of the embodiment;
FIG. 8 is a list of encryption algorithms usable in the IC card in the cryptographic communication method of the embodiment; and
FIG. 9 is a list of encryption algorithms and parameters usable in the cryptographic communication method of the embodiment.

The following describes a cryptographic communication method between a first IC card and a second IC card, wherein both the first IC card and the second IC card having a switching means of encryption algorithms and a protocol processing means, comprising the steps of: (1) a mutual authentication at the beginning of data communication between the first IC card and the second IC card, comprising exchanging information about a usable encryption algorithm between the first IC card and the second IC card to select a commonly usable encryption algorithm between the first IC card and the second IC card by their switching means of encryption algorithms; (2) in the first IC card, passing a plain text data to be sent to the switching means of encryption algorithms thereof; (3) in the switching means of encryption algorithms of the first IC card, encrypting the plain text data to be sent into an encrypted data by using the commonly usable encryption algorithm, converting the encrypted data into a transmission data with a format required by a predetermined protocol, and passing the transmission data to the protocol processing means of the first IC card; (4) in the protocol processing means of the first IC card, converting the transmission data into a transmission data signal in compliance with a predetermined protocol and transmitting it to a communication media; (5) in the protocol processing means of the second IC card, receiving the transmission data signal from the communication media and reversely converting the transmission data signal into a transmission data the same as the original transmission data in the first IC card and passing to the switching means of encryption algorithms of the second IC card; and (6) in the switching means of encryption algorithms of the second IC card, reversely converting the transmission data into an encrypted data the same as the original encrypted data sent by the first IC card, and decrypting the encrypted data into a plain text data to be sent the same as the original plain text data by using the commonly usable encryption algorithm.

In the cryptographic communication method between the first IC card and the second IC card mentioned above, the first and the second IC cards can include a device having an equivalent function to an IC card.

In the cryptographic communication method between the first IC card and the second IC card mentioned above, it is possible to enable both the first and the second IC cards to have information in order of priority of usage among a plurality of encryption algorithms; and in a mutual authentication at the beginning of data communication between the first and the second IC cards, to exchange information of usable encryption algorithms between the first and the second IC cards in order to select an encryption that is given a highest order of priority of usage among the commonly usable encryption algorithms between the first and the second IC cards.

The following also describes an IC card comprising: a selector of encryption algorithm for selecting a commonly usable encryption algorithm as an encryption algorithm for mutual communication with an opposite IC card, according to an exchange of information about a usable encryption algorithm between the opposite IC card at the beginning of mutual authentication with the opposite IC card; an encryption means for encrypting a plain text data to be sent into a first encrypted data by using the selected encryption algorithm; a decryption means for decrypting a second encrypted data received from a communication media by using the selected encryption algorithm; a converting means for converting the first encrypted data using the encryption means into a first transmission data, which is conformed to a predetermined protocol, and for transmitting the first transmission data to the communication media; and a reversely converting means for reversely converting a second transmission data received from the communication media into the second encrypted data, and for passing the second encrypted data to the decryption means.

In the IC card mentioned above, it is possible to enable the selector of encryption algorithm to store information in order of priority of usage among a plurality of encryption algorithms stored therein, and, at the beginning of the mutual authentication with the opposite IC card, to exchange information of encryption algorithms being commonly usable with the opposite IC card and select an encryption algorithm that is given a highest order of priority of usage among the commonly usable encryption algorithms between this IC card and the opposite IC card.

In the IC card mentioned above, this IC card and the opposite IC card can include a device having an equivalent function to an IC card.

By using the cryptographic communication method between the first IC card and the second IC card mentioned above, an encrypted data in the first IC card or the like (hereinafter referred to as the first IC card) is transmitted to the second IC card or the like (also referred to a second IC card) through the communication media, and in the second IC card, the encrypted data from the first IC card is decrypted to the original plain text data. And in the mutual authentication at the beginning of data communication between the first and the second IC cards, the switching means of encryption algorithms in .the first and second IC cards exchange information about usable encryption algorithms and select a commonly usable encryption algorithm in their mutual communication. Then, the first IC card passes to the switching means of encryption algorithms a plain text data to be sent from a memory therein, and the switching means of encryption algorithms of the first IC card encrypts the plain text data into an encrypted data by using the selected commonly usable encryption algorithm, converts the encrypted data into a transmission data with a format required by the predetermined protocol, and passes the transmission data to the protocol processing means of the first IC card. The protocol processing means of the first IC card converts the transmission data into a transmission data signal that complies with the predetermined protocol and transmits to the second IC card via the communication media.

When the second IC card receives the transmission data from the first IC card, the protocol processing means of the second IC card reversely converts the transmission data signal into the original transmission data of the first IC card and passes it to the switching means of encryption algorithms of the second IC card. The switching means of encryption algorithms of the second IC card reversely converts the transmission data into the original encrypted data, and decrypts the encrypted data into the original plain text data the same as the original plain text data of the first IC card by using the selected commonly usable encryption algorithm.

According to this cryptographic communication technology, by merely installing into each IC card the switching means of encryption algorithms that has respective conversion rules between plural encryption algorithms and a predetermined single common communication protocol, the IC cards enable cryptographic communication to occur between user terminals, to which the IC cards are connected, on a basis of the predetermined common communication protocol without any changes in communication function provided therein.

Further, according to the cryptographic communication technology described herein, by setting an order of priority among plural encryption algorithms stored in each IC card, and selecting the encryption algorithm of the highest order of priority among the plural encryption algorithms commonly usable between both IC cards in accordance with communication speed available in the communication media or in accordance with contents to be transmitted between the IC cards, very effective and speedy communication between the IC cards is possible.

By using the cryptographic communication method between IC cards in an electronic ticket distribution system, where a server and a user terminal, to which IC cards are connected, begin mutual data communication or when an IC card and a ticket collecting machine begin mutual data communication, they can both dynamically change encryption algorithms used for mutual authentication and for concealment of contents to be transmitted in accordance with information about commonly usable encryption algorithms exchanged at the beginning of the mutual authentication between them. This procedure at the beginning of the mutual authentication can result in a speedy and secured cryptographic communication between them.

According to the IC card mentioned above, by connecting a plurality of these IC cards to a first and second user terminals, respectively, selectors of encryption algorithm of both ICcards connected to respective user terminals exchange information of usable encryption algorithms at the beginning of mutual authentication, and select a commonly usable encryption algorithm as an encryption algorithm for the mutual communication. Next, in the first IC card connected to the first user terminal, the encryption means encrypts a plain text data to be sent into an encrypted data by using the selected encryption algorithm and the converting means converts the encrypted data into a transmission data, which conforms to a predetermined protocol employed in the first user terminal. The first user terminal transmits the transmission data from the first IC card to the communication media.

The second user terminal, to which the second IC card is connected, receives the transmitted transmission data from the communication media and passes the transmission data to the reversely converting means of the second IC card. The reversely converting means reversely converts the transmission data into the original encrypted data and passes it to the decryption means in the second IC card. The decryption means decrypts the original encrypted data into the original plain text data the same as that of the first IC card by using the selected encryption algorithm.

According to this cryptographic communication procedure realized by the IC cards, by merely installing into each IC card the switching means of encryption algorithms that has respective conversion rules between plural encryption algorithms and a predetermined common communication protocol, the IC cards enable cryptographic communication between user terminals, to which the IC cards are connected, on a basis of the predetermined common communication protocol without any changes to the communication function provided therein.

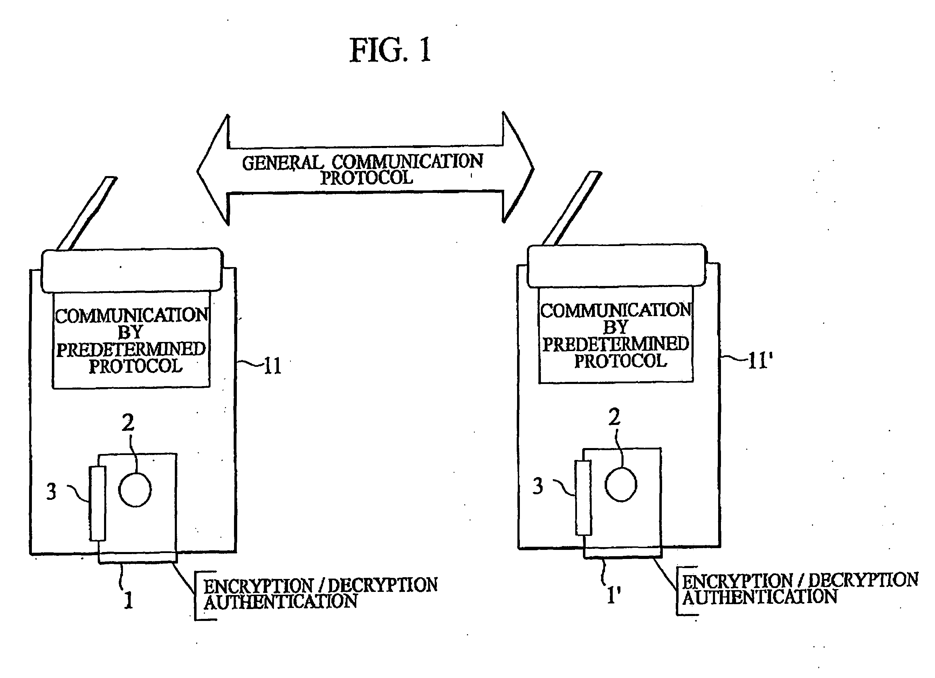

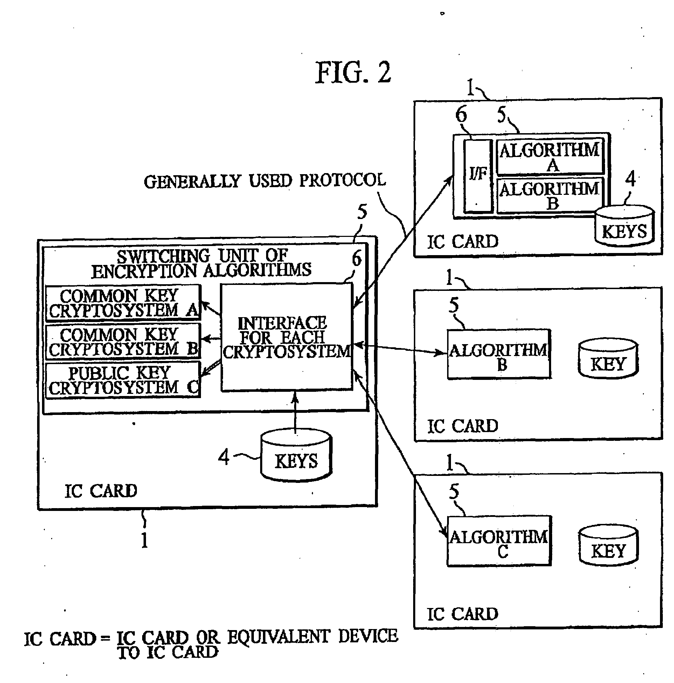

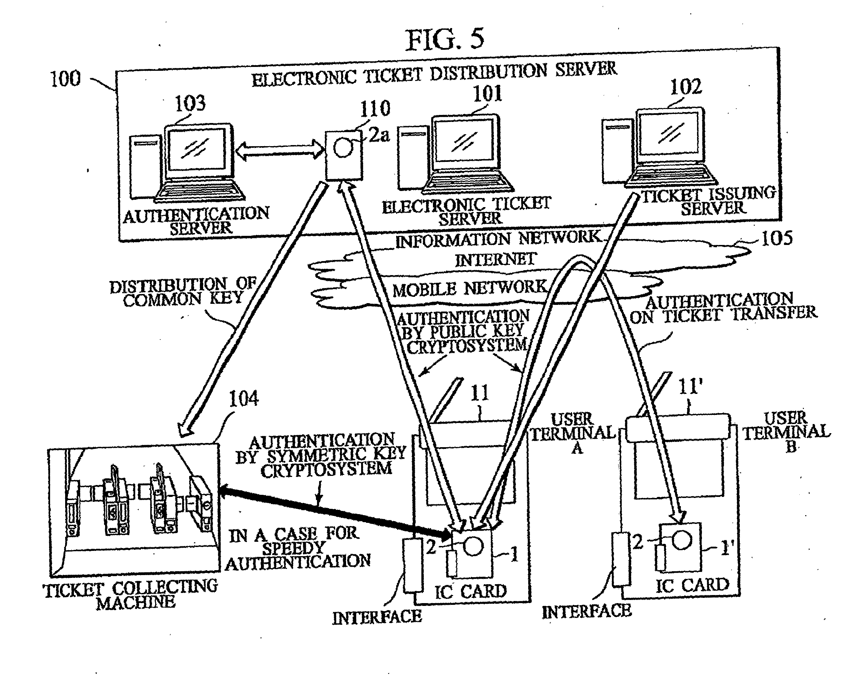

A cryptographic communication system between IC cards of one embodiment of the present invention is shown in FIGs. 1-3. The cryptographic communication system between IC cards is usable for cryptographic authentication and cryptographic data transmission in an electronic ticket distribution system as shown in FIG. 5, wherein the electronic ticket distribution system comprises an electronic ticket server 101, a ticket issuing server 102, an authentication server 103, one or plural user terminals 11 and 11', and a ticket collecting machine 104. These components are able to connect to an information network 105 for mutual communications. The information network 105 includes the Internet, a mobile network and other wired or wireless networks.

In the electronic ticket distribution system as shown in FIG. 5, the electronic ticket server 101 has a tamper resistant device 110, which has an equivalent function to an IC card and sells electronic tickets. The ticket issuing server 102 issues electronic tickets to appointed customers in response to requests from the electronic ticket server 101. The authentication server 103 authenticates a public key and an electronic signalture. Hereinafter, a group of these servers 101, 102 and 103 is called an electronic ticket distributing server 100 for simplicity of explanation.

Each of the user terminals 11 and 11' has an electrical communication device and an interface such as a connecting port and an IC card slot for signal exchange with an IC card 1 or 1' connected thereto. Each of the user terminals 11 and 11' can carry out a procedure of purchasing and storing electric tickets in cooperation with the IC card 1 or 1', where these IC cards are connected to each of the user terminals. The ticket collecting machine 104 has an equivalent function to an IC card and collects electronic tickets from IC cards by cryptographic communication with the IC cards when the electronic tickets are used.

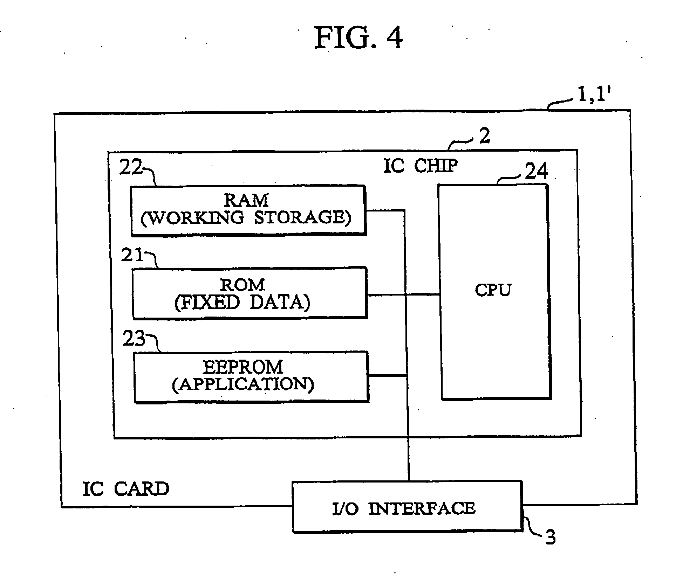

Referring to FIGs. 1-3, an IC chip 2 is incorporated in each of the IC cards 1 and IC card 1'. A contact-type or noncontact-type interface 3 is provided to each of the IC cards 1 and 1', As shown precisely in FIG. 4, the IC chip 2 includes a ROM 21 for storing an OS program and other fixed programs and fixed data, a RAM 22 as working storage, an EEPROM 23 for storing an application program, and a CPU 24 for processing operations.

When a user wants to purchase an electronic ticket, first, the user should insert the IC card 1 to the card slot of the user terminal 11 to connect the interface 3 with a corresponding interface provided in the user terminal 11 for mutual communication between them. Next, the user should connect the user terminal to the information network 105 to access to the electronic ticket distributing server 100, and take necessary procedures for purchase from the user terminal 11. By this operation from the user terminal 11, a purchased electronic ticket is transmitted from the electronic ticket distributing server 100 into the RAM in the IC chip 2 of the IC card 1 and stored therein. Together with the data of the electronic ticket, data of a common key or secret information is transmitted. This common key or the secret information is also stored in the RAM. The common key or secret information is provided for mutual authentication between the IC card 1 and the ticket collecting machine 104 based on a symmetric key cryptosystem.

Contents of information for cryptographic key data 4 stored in the IC card 1 are (1) information of a private key of a user and of a public key of the electronic ticket distributing server 100, necessary for mutual authentication on a public key cryptosystem, and (2-1) information of a private key of the user and a public key of the ticket collecting machine, in a case where a public key cryptosystem is used in communication between the IC card 1 and the ticket collecting machine 104, or (2-2) information of a common key or shared secret necessary for producing a secret key, in a case where a symmetric key cryptosystem is used in communication between the IC card 1 and the ticket collecting machine 104.

A switching unit of encryption algorithms 5 built in the IC chip 2 as an application software includes one or plural encryption algorithms A, B and C, and an interface for each cryptosystem 6. This interface for each cryptosystem 6 has a processing function of converting encrypted data, which is encrypted in the IC chip by one of the encryption algorithms stored therein, into data of a predetermined communication protocol, and of reversely converting a received data of the predetermined communication protocol into an original encrypted data, which is fitted to one of the encryption algorithms stored in the IC chip 2. This function of the interface 6 will be explained in detail later.

It should be noted that each encryption algorithm that is used between the IC card 1 and the electronic ticket distributing server 100 upon purchasing an electronic ticket by the IC card 1, the encryption algorithm that is used between the IC card 1 and an other IC card 1' via user terminals 11 and 11' in communicating with each other in order to transfer an electronic ticket, and the encryption algorithm that is used between the IC card 1 and the ticket collecting machine 104 in verifying the electronic ticket may differ from each other according to the types of server 100, types of IC cards 1 and 1', and types of ticket collecting machine 104.

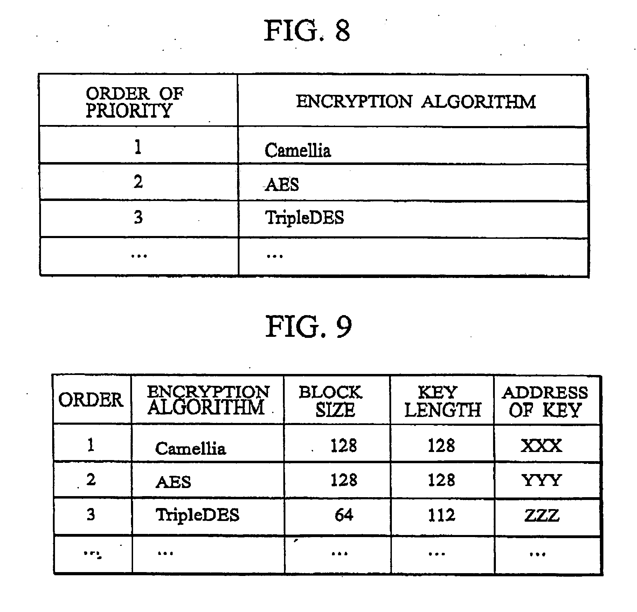

For instance, possible encryption algorithms are such as "Camellia" and "AES" for the symmetric key cryptosystem and "Triple DES" for the public key cryptosystem and others, as is shown in FIG. 8. It is preferable to give an order of priority among the encryption algorithms for mutual communication according to types of IC cards and types of ticket collecting machines. The order of priority is determined according to whether speed or security should be prioritized, and also by taking into account machinery performance. At the beginning of mutual authentication between IC cards or between an IC card and a tamper resistant device having an equivalent function to an IC card, information about types of encryption algorithms stored therein and the order of priority among the encryption algorithms is exchanged as shown in FIG. 8. An encryption algorithm of the highest priority among mutually usable encryption algorithms is selected for their mutual authentication and communication. The list data as shown in FIG. 8 is stored in the ROM or the EEPROM of the IC chip 2 in an IC card.

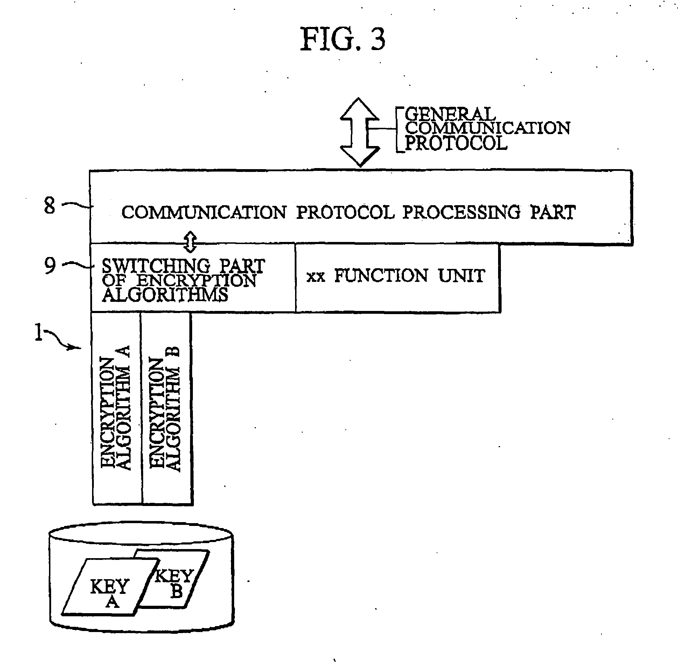

Referring to FIG. 3, in the switching unit of encryption algorithms 5 of the IC card 1, an interface between a communication protocol processing part 8 and a switching part of encryption algorithms 9 are included as a common interface, and four parameters of a cryptographic type, encrypted-data/plain-data, cryptographic key and encryption/decryption are employed therein. The switching part of encryption algorithms 9 converts data so as to comply with a parameter for an encryption algorithm, the parameter that is selected based on a parameter conversion table as shown in FIG. 9, and passes the parameter to a designated encryption algorithm.

Hereinafter, a cryptographic communication method executed by the cryptographic communication system between IC cards of this embodiment will be explained. Referring to FIG. 3, the IC card 1 holds encryption keys A and B. These encryption keys A and B are for respective encryption algorithms A and B to encrypt and decrypt by using these keys. The switching part of encryption algorithms 9 converts data of a predetermined protocol that is received by the communication protocol processing part 8, to an encrypted data. This encrypted data can be decrypted by the IC card 1 via the encryption algorithm A or B. The switching part of encryption algorithms 9 also converts encrypted data encrypted by one of the encrypted algorithms A and B held in the IC card 1 into transmission data, which complies with the predetermined communication protocol, and passes it to the communication protocol processing part 8. In a case where wireless communication with a user terminal 11 is executed via a noncontact type interface, the communication protocol processing part 8 transmits and receives wireless signals that comply with a predetermined wireless communication protocol. In a case where wired communication with the user terminal 11 is executed via a contact type interface, the communication protocol processing part 8 transmits and receives communication signals that comply with a predetermined wired communication protocol.

Hereinafter, a cryptographic communication procedure carried out by a switching unit of encryption algorithms 5 will be explained. As is shown in FIG.1, assume that the user terminal 11, to which the IC card 1 is connected, communicates with opposite user terminal 11', to which the IC card 1' is connected, in order to transfer an electronic ticket by wireless.

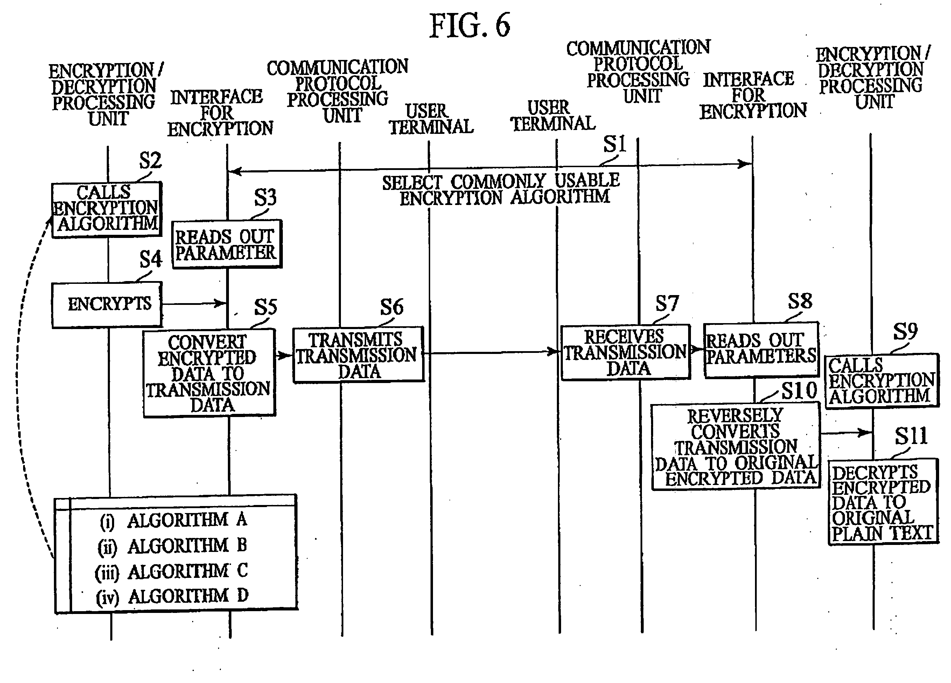

In step S1 of the flowchart shown in FIG. 6, the IC cards 1 and 1' exchange information about commonly usable encryption algorithms at the beginning of the mutual communication in order to select an encryption algorithm to be used in mutual authentication and an encryption algorithm to be used for concealment of transmission data between them. The encryption algorithm(s) is determined by referring to the list of usable encryption algorithms and the order of priority as shown in FIG. 8. Here, suppose that the Triple DES algorithm is selected for both mutual authentication and concealment of the transmission data.

In steps S2 through S5, when the IC card 1 has determined the encryption algorithm to be used, the interface for each cryptosystem 6 in the switching unit of encryption algorithms 5 reads out parameters for data conversion between the selected encryption algorithm and the predetermined communication protocol, and converts the encrypted data using the parameters.

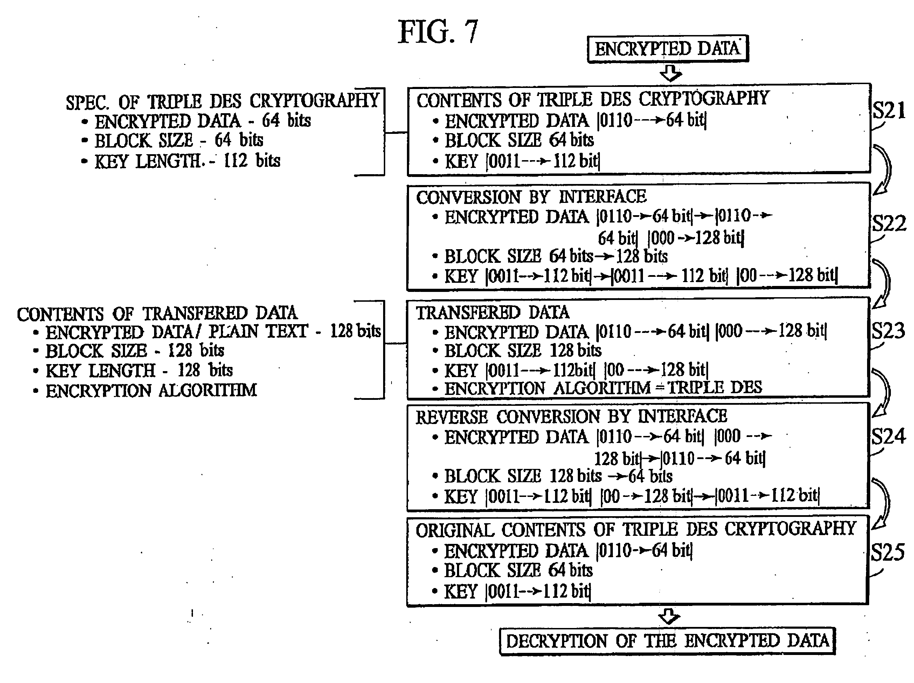

In a case where the selected encryption algorithm is the Triple DES, at step S21 of the flowchart in FIG. 7, the parameters are determined as 64 bits of block size, 128 bits of key length and ZZZ of key address as shown on the table in FIG. 9. In addition, a block length of transfer packet is determined as 128 bits.

In step S22 of the flowchart in FIG. 7, the interface for each cryptosystem 6 processes to fill zeros into 65th bit through 128th bit of encrypted data of 65 bits per unit in order to produce data of 128 bits per unit, wherein the data length of 128 bits is the block length of the packet to be transferred on the communication media. For the information of cryptographic key or the secret information to be sent to an opposite IC card, the interface for each cryptosystem 6 also processes to fill zeros into 113th bit through 128th bit of the encrypted data of 112 bits per unit in order to produce data of 128 bits per unit. The interface for each cryptosystem 6 passed these data of 128 bits per unit to the communication protocol processing part 8. The interface for each cryptosystem 6 attaches information of encryption algorithm used for conversion to the converted data.

Receiving the converted data from the switching part of encryption algorithms 9, the communication protocol processing part 8 passes the data to the user terminal 11. The user terminal 11 converts the data into transmission data signals and transmits to the opposite user terminal 11' (step S6 of the flowchart in FIG. 6 and step S23 of the flowchart in FIG. 7).

In step S7 of the flowchart in FIG. 6, the transmission data signals are received by the opposite user terminal 11', and the signals are passed to the communication protocol processing part 8. The communication protocol processing part 8 reversely converts the received data signals into original data of the predetermined communication protocol and passes it to the switching part of encryption algorithms 9.

In the opposite IC card 1', its switching part of encryption algorithms 9 reads out parameters of the encryption algorithm in the same method as set forth in step S4, and reversely converts the received packet data of 128 bits per unit into the original encrypted data (steps S8 and S9 of the flowchart in FIG. 6, and steps S24 and S25 of the flowchart in FIG. 7). Further, in the opposite IC card 1', the selected encryption algorithm decrypts the original encrypted data into the original plain text data, which originated in the IC card 1 (steps S10 and S11 of the flowchart in FIG. 6).

The same methods of encryption processes, the data conversion conforming to the predetermined communication protocol, the data transmission/reception on the predetermined communication protocol, the reverse conversion of the received data into the original encrypted data and the decryption of the encrypted data into the original plain text can be equally adopted by the opposite IC card 1' when it transmits encrypted data to the IC card 1.

According to this cryptographic communication technology of the present invention, by merely installing into each IC card a switching means of encryption algorithms that has respective conversion rules between plural encryption algorithms and a predetermined single common communication protocol, the IC card can enable cryptographic communication between user terminals, to which the IC cards are connected, on the basis of a predetermined single common communication protocol without any changes in communication function provided therein.

Further, according to the cryptographic communication method between IC cards in an electronic ticket distribution system, when a server and a user terminal, to each of which an IC card is connected, begin mutual data communication or when an IC card and a ticket collecting machine begin mutual data communication, they both can dynamically change encryption algorithms used for mutual authentication and for concealment of contents to be transmitted in accordance with information of commonly usable encryption algorithms selected at the beginning of the mutual authentication between them, and this procedure at the beginning of the mutual authentication can result in a speedy and secured cryptographic communication between them.

Furthermore, according to the IC card of the present invention mentioned above, by merely installing a switching means of encryption algorithms into each IC card, the means having respective conversion rules between plural encryption algorithms and a predetermined single common communication protocol, the IC card enables cryptographic communication to occur between user terminals, to each of which the IC card is connected, on the basis of the predetermined single common communication protocol without any changes in communication function provided therebetween,

## Claims

1. A cryptographic communication method between a first IC card (1) and a second IC card (1'), comprising the steps of:
at the beginning of data communication for a mutual authentication between the first IC card and the second IC card,
exchanging information about one or plural usable encryption algorithms (A, B, C) between the first IC card and the second IC card in order to select a commonly usable encryption algorithm between the first IC card and the second IC card according to a predetermined order of priority among the usable encryption algorithms;
in the first IC card (1),
encrypting a plain text data to be sent into an encrypted data by using the selected commonly usable encryption algorithm;
editing the encrypted data into a pre-transmission data of a predetermined bit-length required by a predetermined transmission protocol by filling zeros to null bits of the data and converting the pre-transmission data to a transmission data packet for data-transmission; and
transmitting the transmission data packet to a communication media (105); and
in the second IC card (1'),
receiving the transmission data packet from the communication media (105);
reversely converting the received transmission data packet to a pre-transmission data and re-editing the pre-transmission data into an encrypted data the same as the original encrypted data sent by the first IC card by deleting zeros filled in the null bits; and
decrypting the encrypted data into a plain text data the same as the original plain text data sent by the first IC card by using the selected commonly usable encryption algorithm.

2. An electronic ticket distribution system adapted to apply a cryptographic communication method between IC cards (1, 1'),
wherein the electronic ticket distribution system comprises:
a server (100) having a tamper resistant device (110), the device being arranged to issue and sell electronic tickets, and which has a first function means equivalent to an IC card (1, 1');
a user terminal (11, 11') having an electrical communication means and having an interface for signal exchange with an IC card (1, 1'), the IC card being connected to the interface and arranged to execute purchase and storage of an electronic ticket; and
a ticket collecting machine (104), which has a second function means equivalent to an IC card (1, 1'), arranged to collect electronic tickets upon their usage;
the method comprising the steps of:
exchanging information about one or plural commonly usable encryption algorithms (A, B, C) at the beginning of a mutual authentication between the IC card (1,1') and the first or the second function means equivalent to an IC card;
selecting an encryption algorithm commonly usable between the IC card (1,1') and the first or the second function means equivalent to an IC card as an encryption algorithm to be used for mutual authentication and for concealment of communication data between the IC card and the first or the second function means equivalent to an IC card, according to the information exchanged at the beginning of the mutual authentication between the IC card and the first or the second function means equivalent to an IC card; and
in one of the IC card and the first or the second function means equivalent to an IC card,
encrypting a plain text data to be sent into an encrypted data by using the selected commonly usable encryption algorithm;
editing the encrypted data into a pre-transmission data of a predetermined bit-length required by a predetermined transmission protocol by filling zeros to null bits of the data and converting the pre-transmission data to a transmission data packet for data-transmission; and
transmitting the transmission data packet to a communication media (105); and
in other one of the IC card and the first or the second function means equivalent to an IC card;
receiving the transmission data packet from the communication media (105);
reversely converting the received transmission data packet to a pre-transmission data of the predetermined bit-length and re-editing the pre-transmission data into an encrypted data the same as the original encrypted data that was sent by one of the IC card and the first or the second function means equivalent to an IC card by deleting zeros filled in the null bits; and
decrypting the encrypted data into a plain text data the same as the original plain text data that was sent by one of the IC card and the first or the second function means equivalent to an IC card by using the selected commonly usable encrypted algorithm.

3. An IC card (1, 1') comprising:
a selector of encryption algorithm (A, B, C) arranged to select a commonly usable encryption algorithm as an encryption algorithm for mutual communication with an opposite IC card, according to an exchange of information about one or plural usable encryption algorithms between the opposite IC card at the beginning of a mutual authentication with the opposite IC card according to a predetermined order of priority among the usable encryption algorithms;
an encryption means (9) arranged to encrypt a first plain text data to be sent into a first encrypted data by using the selected encryption algorithm;
an editing means (6) arranged to edit the first encrypted data into a first pre-transmission data of a predetermined bit-length required by a predetermined transmission protocol by filling zeros to null bits of the data;
a converting means (9) arranged to convert the first pre-transmission data into a first transmission data packet for data-transmission and to transmit the first transmission data packet to a communication media;
a reversely-converting means (8) arranged to reversely convert a second transmission data packet received from the communication media into a second pre-transmission data of the predetermined bit-length;
a re-editing means (6) arranged to re-edit the second pre-transmission data into a second encrypted data by deleting zeros filled in null bits of the data; and
a decryption means (9) arranged to decrypt the second encrypted data into a second plain text data as the same of the original by using the selected encryption algorithm.

## Patentansprüche

1. Ein kryptographisches Kommunikationsverfahren zwischen einer ersten IC Karte (1) und einer zweiten IC Karte (1'), umfassend die folgenden Schritte:
zum Beginn einer Datenkommunikation für eine gegenseitige Authentifizierung zwischen der ersten IC Karte und der zweiten IC Karte,
Austauschen von Information über einen oder mehrere verwendbare Verschlüsselungsalgorithmen (A, B, C) zwischen der ersten IC Karte und der zweiten IC Karte, um einen allgemein verwendbaren Verschlüsselungsalgorithmus zwischen der ersten IC Karte und der zweiten IC Karte gemäß einer vorbestimmten Prioritätsreihenfolge unter den verwendbaren Verschlüsselungsalgorithmen auszuwählen;
in der ersten IC Karte (1),
Verschlüsseln eines Klartextdatums, das in einem verschlüsselten Datum zu senden ist, durch Verwenden des ausgewählten gemeinsam verwendbaren Verschlüsselungsalgorithmus;
Bearbeiten der verschlüsselten Daten in ein Vor- bzw. Prä-Übertragungsdatum (Englisch: Pre-Transmission Data) mit einer vorbestimmten Bitlänge, die von einem vorbestimmten Übertragungsprotokoll verlangt wird, durch Einfüllen von Nullen in Null-Bits der Daten und Umwandeln des Prä-Übertragungsdatums in ein Übertragungsdatenpaket zur Datenübertragung; und
Übertragen des Übertragungsdatenpakets an ein Kommunikationsmedium (105); und
in der zweiten IC Karte (1'),
Empfangen des Übertragungsdatenpakets von dem Kommunikationsmedium (105);
Rückwärtsumwandeln des empfangenen Übertragungsdatenpakets in ein Prä-Übertragungsdatum und erneutes Bearbeiten des Prä-Übertragungsdatums in ein verschlüsseltes Datum gleiche wie das von der ersten IC Karte gesendete ursprüngliche verschlüsselte Datum durch Löschen von in Null-Bits eingefüllten Nullen; und
Entschlüsseln der verschlüsselten Daten in ein Klartextdatum gleich wie das von der ersten IC Karte gesendete ursprüngliche Klartextdatum durch Benutzung des ausgewählten, gemeinsam verwendbaren Verschlüsselungsalgorithmus.

2. Ein elektronisches Kartenausgabesystem, ausgebildet zum Anwenden eines kryptographischen Kommunikationsverfahrens zwischen IC Karten (1, 1'),
wobei das elektronische Kartenausgabesystem umfasst:
einen Server (100) mit einem verfälschungs- bzw. manipulationssicheren Gerät (110), wobei das Gerät dazu ausgebildet ist, elektronische Karten auszugeben und zu verkaufen, und ein erstes Funktionsmittel äquivalent zu einer IC Karte (1, 1') aufweist;
ein Benutzerendgerät (11, 11') mit einem elektrischen Kommunikationsmittel und mit einer Schnittstelle zum Signalaustausch mit einer IC Karte (1, 1'), wobei die IC Karte mit der Schnittstelle verbunden ist und dazu ausgebildet ist, den Kauf und die Speicherung einer elektronischen Karte auszuführen; und
eine Karteneinzugsmaschine (104), die ein zweites Funktionsmittel äquivalent zu einer IC Karte (1, 1') aufweist, und die dazu ausgebildet ist, elektronische Karten bei ihrer Benutzung einzuziehen;
das Verfahren umfassend die folgenden Schritte:
Austauschen von Information über einen oder mehrere allgemein verwendbare Verschlüsselungsalgorithmen (A, B, C) zum Beginn einer gegenseitigen Authentifizierung zwischen der IC Karte (1, 1') und dem zu einer IC Karte äquivalenten, ersten oder zweiten Funktionsmittel; Auswählen eines Verschlüsselungsalgorithmus, der gemeinsam zwischen der IC Karte (1, 1') und dem zu einer IC Karte äquivalenten, ersten oder zweiten Funktionsmittel verwendbar ist, als einen Verschlüsselungsalgorithmus, der zur gegenseitigen Authentifizierung und zum Verschleiern von Kommunikationsdaten zwischen der IC Karte und dem zu einer IC Karte äquivalenten, ersten oder dem zweiten Funktionsmittel verwendet werden soll ist, gemäß der Information, die zu Beginn der gegenseitigen Authentifizierung zwischen der IC Karte und dem zu einer IC Karte äquivalenten, ersten oder dem zweiten Funktionsmittel ausgetauscht worden ist; und
in einer der IC Karten und dem zu einer IC Karte äquivalenten, ersten oder zweiten Funktionsmittel, Verschlüsseln eines Klartextdatums, das in einem verschlüsselten Datum unter Benutzung des ausgewählten allgemein verwendbaren Verschlüsselungsalgorithmus zu senden ist;
Bearbeiten der verschlüsselten Daten in ein Vor- bzw. Prä-Übertragungsdatum mit einer vorbestimmten Bitlänge, die von einem vorbestimmten Übertragungsprotokoll verlangt wird, durch Einfüllen von Nullen in Null-Bits der Daten und Umwandeln des Prä-Übertragungsdatums in ein Übertragungsdatenpaket zur Datenübertragung; und
Übertragen des Übertragungsdatumspakets an ein Kommunikationsmedium (105); und
in einer anderen der IC Karten und dem zu einer IC Karte äquivalent, ersten oder zweiten Funktionsmittel: Empfangen des Übertragungsdatenpakets von dem Kommunikationsmedium (105);
Rückwärtsumwandeln des empfangenen Übertragungsdatenpakets in ein Prä-Übertragungsdatum mit der vorbestimmten Bitlänge und erneutes Bearbeiten des Prä-Übertragungsdatums in ein verschlüsseltes Datum gleich wie das durch eine der IC Karten und das zu einer IC Karte äquivalente, erste oder das zweite Funktionsmittel gesendete, ursprüngliche verschlüsselte Datum durch Löschen von in den Null-Bits eingefüllten Nullen; und
Entschlüsseln der verschlüsselten Daten in ein Klartextdatum gleich wie das durch eine der IC Karten und das zu einer IC Karte äquivalente, erste oder das zweite Funktionsmittel gesendete, ursprüngliche Klartextdatum durch Verwendung des ausgewählten, allgemein verwendbaren Verschlüsselungsalgorithmus.

3. Eine IC Karte (1, 1') umfassend:
eine Auswahlvorrichtung für einen Verschlüsselungsalgorithmus (A, B, C), der dazu ausgebildet, einen allgemein verwendbaren Verschlüsselungsalgorithmus auszuwählen als einen Verschlüsselungsalgorithmus zur gegenseitigen Kommunikation mit einer gegenüberstehenden IC Karte gemäß einem Austausch von Information über einen oder mehrere verwendbare Verschlüsselungsalgorithmen zwischen der gegenüberstehenden IC Karte zu Beginn einer gegenseitigen Authentifizierung mit der gegenüberstehenden IC Karte gemäß einer vorbestimmten Prioritätsreihenfolge unter den verwendbaren Verschlüsselungsalgorithmen;
ein Verschlüsselungsmittel (9), der dazu ausgebildet ist, ein in ein erstes verschlüsseltes Datum zu sendendes, erstes Klartextdatum durch Benutzung des ausgewählten Verschlüsselungsalgorithmus zu verschlüsseln;
ein Bearbeitungsmittel (6), das dazu ausgebildet ist, das erste verschlüsselte Datum in ein erstes Prä-Übertragungsdatum mit einer, von einem vorbestimmten Übertragungsprotokoll verlangten vorbestimmten Bitlänge durch Einfüllen von Nullen in die Null-Bits der Daten zu verarbeiten;
ein Umwandlungsmittel (9), das dazu ausgebildet ist, das erste Prä-Übertragungsdatum in ein erstes Übertragungsdatenpaket umzuwandeln zur Datenübertragung und zum Übertragen des ersten Übertragungsdatenpakets an ein Kommunikationsmedium;
ein Rückwärtsumwandlungsmittel (8), das dazu ausgebildet ist, ein von dem Kommunikationsmedium empfangenes zweites Übertragungsdatenpaket in ein zweites Prä-Übertragungsdatum mit der vorbestimmten Bitlänge rückwärts umzuwandeln;
ein Mittel zum erneuten Bearbeiten (6), das dazu ausgebildet ist, das zweite Prä-Übertragungsdatum erneuten zu bearbeiten in ein zweites verschlüsseltes Datum durch Löschen von in den Null-Bits der Daten eingefüllten Nullen; und
ein Entschlüsselungsmittel (9), das dazu ausgebildet ist, das zweite verschlüsselte Datum in ein zweites Klartextdatum gleich wie das ursprüngliche unter Benutzung des ausgewählten Verschlüsselungsalgorithmus zu entschlüsseln.

## Revendications

1. Procédé de communication cryptographique entre une première carte de CI (1) et une seconde carte de CI (1'), comprenant les étapes consistant à :
au début d'une communication de données pour une authentification mutuelle entre la première carte de CI et la seconde carte de CI,
échanger des informations concernant un ou plusieurs algorithmes de chiffrement (A, B, C) utilisables entre la première carte de CI et la seconde carte de CI afin de sélectionner un algorithme de chiffrement utilisable en commun entre la première carte de CI et la seconde carte de CI, selon un ordre prédéterminé de priorité parmi les algorithmes utilisables de chiffrement ;
dans la première carte de CI (1),
chiffrer des données d'un texte en clair devant être envoyées sous forme de données chiffrées, en utilisant l'algorithme de chiffrement utilisable en commun et sélectionné ;
mettre en forme les données chiffrées en des données de prétransmission de longueur prédéterminée de bits, requise par un protocole prédéterminé de transmission, en garnissant de zéros des bits nuls des données et en convertissant les données de prétransmission en un paquet de données de transmission pour une transmission de données ; et
transmettre le paquet de données de transmission à des moyens de communication (105) ; et
dans la seconde carte de CI (1'),
recevoir le paquet de données de transmission provenant des moyens de communication (105) ;
convertir inversement le paquet reçu de données de transmission en des données de prétransmission et remettre en forme les données de prétransmission en des données chiffrées, identiques aux données chiffrées originales envoyées par la première carte de CI, en supprimant des zéros remplissant les bits nuls ; et
déchiffrer les données chiffrées en des données de texte en clair, identiques aux données du texte en clair originales, envoyées par la première carte de CI en utilisant l'algorithme sélectionné de chiffrement utilisable en commun.

2. Système de distribution de tickets électroniques, propre à appliquer un procédé de communication cryptographique entre des cartes de CI (1, 1'),
dans lequel le système distributeur de tickets électroniques comprend :
un serveur (100) ayant un dispositif résistant aux fraudes (110), le dispositif étant prévu à émettre et à vendre des tickets électroniques, et qui a un premier moyen de fonction, équivalent à une carte de CI (1, 1') ;
un terminal utilisateur (11, 11') ayant un moyen de communication électrique, et ayant une interface pour un échange de signaux avec une carte de CI (1, 1'), la carte de CI étant reliée à l'interface et prévue pour procéder à un achat et à un stockage d'un ticket électronique ; et
une machine collectrice de tickets (104) qui a un second moyen de fonction équivalent à une carte de CI (1, 1'), prévu pour collecter des tickets électroniques lors de leur utilisation ;
le procédé comprenant les étapes consistant à :
échanger des informations concernant un ou plusieurs algorithmes de chiffrement (A, B, C) utilisables en commun, au début d'une authentification mutuelle entre la carte de CI (1, 1') et le premier ou le second moyen de fonction, équivalent à une carte de CI ;
sélectionner un algorithme de chiffrement utilisable en commun entre la carte de CI (1, 1') et le premier ou le second moyen de fonction équivalent à une carte de CI, en tant qu'algorithme de chiffrement devant être utilisé pour une authentification mutuelle et pour le masquage de données de communication entre la carte de CI et le premier ou le second moyen de fonction équivalent à une carte de CI, selon les informations échangées au début de l'authentification mutuelle entre la carte de CI et le premier ou le second moyen de fonction, équivalent à une carte de CI ; et
dans l'un de la carte de CI et du premier ou du second moyen de fonction équivalent à une carte de CI,
chiffrer des données d'un texte en clair devant être envoyé sous forme de données chiffrées, en utilisant l'algorithme de chiffrement utilisable en commun ;
mettre en forme des données chiffrées en des données de prétransmission d'une longueur prédéterminée de bits, requise par un protocole prédéterminé de transmission, en garnissant de zéros des bits nuls des données et en convertissant les données de prétransmission en un paquet de données de transmission pour une transmission de données ; et
transmettre le paquet de données de transmission à des moyens de communication (105) ; et
dans l'autre de la carte de CI et du premier ou du second moyen de fonction équivalent à une carte de CI,
recevoir le paquet de données de transmission provenant des moyens de communication (105) ;
convertir inversement le paquet reçu de données de transmission en des données de prétransmission de la longueur prédéterminée de bits, et remettre en forme les données de prétransmission en des données chiffrées, identiques aux données chiffrées originales, qui ont été envoyées par l'un de la carte de CI et du premier ou du second moyen de fonction équivalent à une carte de CI, en supprimant les zéros remplissant les bits nuls ; et
déchiffrer les données chiffrées en des données de texte en clair, identiques aux données du texte en clair originales, envoyées par l'un de la carte de CI et du premier ou du second moyen de fonction équivalent à une carte de CI, en utilisant l'algorithme sélectionné de chiffrement utilisable en commun.

3. Carte de CI (1, 1') comprenant :
un sélecteur d'algorithme de chiffrement (A, B, C) prévu pour sélectionner un algorithme de chiffrement utilisable en commun, en tant qu'algorithme de chiffrement pour une communication mutuelle avec une carte de CI opposée, selon un échange d'informations concernant un ou plusieurs algorithmes de chiffrement utilisables avec la carte de CI opposée, au début d'une authentification mutuelle avec la carte de CI opposée, selon un ordre prédéterminé de priorité parmi les algorithmes utilisables de chiffrement ;
un moyen de chiffrement (9) prévu pour chiffrer des premières données d'un texte en clair devant être envoyées sous forme de premières données chiffrées, en utilisant l'algorithme sélectionné de chiffrement ;
un moyen de mise en forme (6) prévu pour mettre en forme les premières données chiffrées en des premières données de prétransmission d'une longueur prédéterminée de bits, requise par un protocole prédéterminé de transmission, en garnissant de zéros des bits nuls des données ;
un moyen de conversion (9) prévu pour convertir les premières données de prétransmission en un paquet de premières données de transmission pour une transmission de données, et pour transmettre le paquet de premières données de transmission à des moyens de communication ;
un moyen de conversion inverse (8) prévu pour convertir en sens inverse un paquet de secondes données de transmission provenant des moyens de communication, en des secondes données de prétransmission de la longueur prédéterminée de bits ;
un moyen de remise en forme (6) prévu pour remettre en forme les secondes données de prétransmission en des secondes données chiffrées, en supprimant les zéros remplissant les bits nuls des données ; et
un moyen de déchiffrement (9) prévu pour déchiffrer les secondes données chiffrées en des secondes données de texte en clair, identiques à l'original, en utilisant l'algorithme de chiffrement sélectionné.
